# EUROPEAN PATENT SPECIFICATION

(11) **EP 3 175 034 B1**
(45) Date of publication and mention of the grant of the patent: **22.12.2021**
(21) Application number: 15745682.3
(22) Date of filing: 21.07.2015
(51) Int. Cl.: D06N 7/00, B32B 5/26, B32B 27/12, B32B 27/32

(54) **CARPET TILE WITH POLYOLEFIN SECONDARY BACKING**
TEPPICHFLIESE MIT SEKUNDÄRER POLYOLEFINRÜCKSEITE
DALLE DE TAPIS À RENFORT SECONDAIRE DE POLYOLÉFINE

(30) Priority: 30.07.2014 US 201462030823 P; 17.07.2015 US 201514801899
(43) Date of publication of application: 07.06.2017
(73) Proprietor: Milliken & Company, Spartanburg, South Carolina 29303 (US)
(72) Inventor: ARVIDSON, Sara A., Simpsonville, South Carolina 29680 (US); LI, Xin, Boiling Springs, South Carolina 29316 (US); SCRIVENS, Walter A., Moore, South Carolina 29369 (US); MEHL, Nathan A., Spartanburg, South Carolina 29301 (US); HONOHAN, Andrew M., Greenville, South Carolina 29601 (US); WILLIAMS, Dale R., Greer, South Carolina 29650 (US); ROBERTS, Brandon T., Greer, South Carolina 29651 (US); LOVE, III, Franklin S., Columbus, North Carolina 28722 (US); RUNDQUIST, Paul A., Mount Carmel, Tennessee 37645 (US)
(74) Representative: Hoffmann Eitle
(86) International application number: PCT/US2015/041251
(87) International publication number: WO 2016/018670

(56) References cited:
- WO-A1-98/23445
- WO-A1-2015/100073
- JP-A- H05 132 870
- JP-A- H06 105 737
- JP-B2- 3 030 124
- US-A- 5 240 530

## Description

### TECHNICAL FIELD

This invention relates to a carpet tile that includes a polyolefin secondary backing layer. In particular, this invention relates to modular carpet tiles having at least one layer of polyolefin-containing thermoplastic polymer in the secondary backing of the carpet tile. By modifying the composition of the carpet tiles in this manner, the carpet tiles are able to withstand the high temperatures associated with surface printing of the tiles, while still maintaining cold temperature flexibility.

### BACKGROUND

Typically, secondary backings are woven or non-woven fabric reinforcement layers laminated to the back of tufted carpet. Secondary backings are attached to the primary backing with adhesives through heat and pressure. The term "secondary backing" is also sometimes used to describe attached polymeric back coatings, such as latex foam, that is attached to the flooring substrate.

The present invention addresses the problem of creating a carpet tile having low temperature flexibility, such as during installation in a new building without heat, and high temperature resistance, such that the tile withstands elevated temperatures of a print range. By incorporating at least one layer of thermoplastic olefin polymer into the secondary backing of the carpet tile, the present invention solves the aforementioned problem of achieving a tile having both low temperature flexibility and high temperature resistance. The secondary backing of the present invention may be comprised of a single layer of material, often referred to as a "cap layer." Alternatively, the secondary backing may include a cap layer and an additional layer often referred to as a "laminate layer" and an additional reinforcing layer.

Thus, the present invention provides a low cost, modular carpet tile that, based on its composition, exhibits low temperature flexibility and high temperature resistance. The carpet tile of the present invention also meets all industry standard specifications for e.g. wear, tuft lock, and cup and curl.

US 5,240,530 relates to carpets and methods for producing/recycling carpets, such as a method for recycling a carpet comprising the steps of (a) manufacturing a carpet, said manufacturing comprising (i) fixing tufts of thermoplastic carpet fibers to a thermoplastic primary backing so that the tufts protrude from the top surface of the primary backing, and (ii) integrally fusing at least one of the primary backing or tufts to a heated extruded sheet of a thermoplastic polymer; (b) collecting pieces of said carpet selected for recycling; and (c) melting said pieces to make a feedstock.

WO 1998/023445 discloses a tufted carpet, comprising (i) a primary backing stitched with loops of yarn to form a tufted structure projecting outwardly from said primary backing;(ii) a polyolefin locking layer affixed to the primary backing; (iii) a moisture barrier polyolefin layer affixed to the polyolefin locking layer; and (iv) a secondary backing, comprising a woven polyolefin, affixed to the moisture barrier polyolefin layer.

JP-A-1994-105737 describes a low-fuming carpet tile having a backing layer comprising 10-85 wt%, in total, of an amorphous propylene/butene copolymer and/or non-crystalline propylene/butene/ethylene terpolymer, 1-10 wt% of crystalline polypropylene, and 10-85 wt% of a filler which contains, relative to 100 pbw of the organic matter in the resin composition, 5-300 pbw of magnesium hydroxide.

JP-A-1993-132870 relates to a resin composition comprising 100 pbw of a resin part comprising (a) 50-90 wt% of an amorphous polyolefin and (b) 10-50 wt% of a tackifier, (c) 0-30 pbw of crystalline polypropylene, and (d) 25-900 pbw of an inorganic filler including magnesium carbonate, and a composition comprising the composition for a backing of a tile carpet.

WO 2015/100073 describes a carpet comprising (a) a plurality of fibers; and (b) an adhesion layer for locking the plurality of fibers, wherein the adhesion layer comprises a polymer blend containing (i) a first propylene-based polymer which is a propylene homopolymer of or a copolymer of propylene and ethylene or a C₄₋₁₀-α-olefin; and (ii) a second propylene-based polymer which is different from the first one and is a propylene homopolymer or a copolymer of propylene and ethylene or a C₄₋₁₀-α-olefin; wherein the polymer blend has a melt viscosity, measured at 190°C according to ASTM D-3236, of 500-25,000 cP.

JP-A-1993-057522 discloses a carpet base material comprising, on its back side, a main polymer of an amorphous propylene/ethylene random copolymer and/or amorphous polypropylene, magnesium hydroxide, calcium carbonate, and a petroleum-based tackifier, and a carpet tile comprising this base material.

### BRIEF SUMMARY

The invention relates to a carpet comprising the following sequential layers:
(a) pile yarns tufted through a primary backing to form a primary composite layer;
(b) a precoat layer comprising a polymer; and
(c) a backing layer comprising (i) a thermoplastic olefin polymer which is a polymer blend comprising
   - 5-80 wt.-% of a propylene/ethylene copolymer having a propylene content of 50-91%, and having low temperature flexibility, and
   - 1-20 wt.-% of an isotactic polypropylene having an isotactic index of > 0.95 and having high temperature resistance.

Preferred embodiments of the invention are as defined in the appended dependent claims and/or in the following detailed description.

### BRIEF DESCRIPTION OF THE DRAWINGS

Figure 1 is a schematic drawing of the components of a carpet tile according to one embodiment of the present invention.
Figure 2 is a diagram illustrating one embodiment of the manufacturing process for making the carpet tile of the present invention.
Fig. 3 is a diagram illustrating an alternative embodiment of the manufacturing process for making the carpet tile of the present invention.
Fig. 4 is a flow diagram illustrating steps comprising the manufacturing process for making the carpet tile of the present invention.
FIG. 5 is a schematic representation of an extrusion coating line for making carpet tile according to the present invention.

### DETAILED DESCRIPTION

The term "carpet," as used herein, is intended to describe a textile substrate which comprises face fibers and which is utilized to cover surfaces on which people are prone to walk. Thus, carpet includes, for example, broadloom carpet; rugs; carpet tile; floor mats; and indoor and outdoor rugs, tiles and floor mats. Carpet tile is also known as modular carpet.

The term "polymer" means a material that comprises large molecules, or macromolecules, composed of many repeated subunits. In this application, a blend of more than one polymer is also considered a polymer.

The term "polyolefin" is any of a class of polymers produced from olefin (also called an alkene with the general formula CₙH₂ₙ) monomers. Polyolefin materials include, for example, polyethylene and polypropylene. Polyolefin materials also include polymers that contain more than one type of olefin monomer, for example, propylene-ethylene copolymer, ethylene-butene copolymer. The term "olefin-containing polymer" means a polymer containing at least one type of olefin monomer in the polymer chain. Propylene polymer means a polymer derived from some amount of propylene monomer. Propylene polymers include propylene homopolymers or polymers of propylene with other monomers.

"Elastomer" or "elastomeric materials" refers to any polymer or composition of polymers (such as blends of polymers) consistent with the ASTM D1566 definition and may be used interchangeably with the term "rubber(s)". Elastomer includes mixed blends of polymers such as melt mixing and/or reactor blends of polymers. "Compatibilizer" or "compatibilizing agent" refers to a material that improves the uniformity or physical properties of a blend of at least two components by acting as an interfacial agent.

As already mentioned, the invention relates to a carpet comprising the following sequential layers:
(a) pile yarns tufted through a primary backing to form a primary composite layer;
(b) a precoat layer comprising a polymer; and
(c) a backing layer comprising (i) a thermoplastic olefin polymer which is a polymer blend comprising
   - 5-80 wt.-% of a propylene/ethylene copolymer having a propylene content of 50-91%, and having low temperature flexibility, and
   - 1-20 wt.-% of an isotactic polypropylene having an isotactic index of > 0.95 and having high temperature resistance.

Face Yarn and Primary Backing Layer:

The face yarn provides the appearance or aesthetics of the carpet tile. The backing can be either a woven, nonwoven or knitted product. The backing layer supports the face yarn.

The material comprising the face yarn and primary backing layer may independently be selected from synthetic fiber, natural fiber, man-made fiber using natural constituents, inorganic fiber, glass fiber, and a blend of any of the foregoing. By way of example only, synthetic fibers may include polyester, acrylic, polyamide, polyolefin, polyaramid, polyurethane, or blends thereof. More specifically, polyester may include polyethylene terephthalate, polytrimethylene terephthalate, polybutylene terephthalate, polylactic acid, or combinations thereof. Polyamide may include nylon 6, nylon 6,6, or combinations thereof. Polyolefin may include polypropylene, polyethylene, or combinations thereof. Polyaramid may include poly-p-phenyleneteraphthalamide (i.e., Kevlar^{®}), poly-m-phenyleneteraphthalamide (i.e., Nomex^{®}), or combinations thereof. Exemplary natural fibers include wool, cotton, linen, ramie, jute, flax, silk, hemp, or blends thereof. Exemplary man-made materials using natural constituents include regenerated cellulose (i.e., rayon), lyocell, or blends thereof.

The material comprising the face yarn and primary backing layer may be formed from staple fiber, filament fiber, slit film fiber, or combinations thereof. The fiber may be exposed to one or more texturing processes. The fiber may then be spun or otherwise combined into yarns, for example, by ring spinning, open-end spinning, air jet spinning, vortex spinning, or combinations thereof. Accordingly, the material comprising the face yarn and primary backing layer will generally be comprised of interlaced fibers, interlaced yarns, loops, or combinations thereof.
The material comprising the face yarn and primary backing layer may be comprised of fibers or yarns of any size, including microdenier fibers or yarns (fibers or yarns having less than one denier per filament). The fibers or yarns may have deniers of < 0.1 to 2000 denier per filament or, more preferably, < 1 to 500 denier per filament.

Furthermore, the material comprising the face yarn and primary backing layer may be partially or wholly comprised of multi-component or bi-component fibers or yarns in various configurations such as, for example, islands-in-the-sea, core and sheath, side-by-side, or segmented pie configurations. Depending on the configuration of the bi-component or multi-component fibers or yarns, the fibers or yarns may be splittable along their length by chemical or mechanical action.

Additionally, the fibers comprising the material comprising the face yarn and primary backing layer may include additives coextruded therein, may be precoated with any number of different materials, including those listed in greater detail below, and/or may be dyed or colored to provide other aesthetic features for the end user with any type of colorant, such as, for example, poly(oxyalkylenated) colorants, as well as pigments, dyes, and tints. Other additives may also be present on and/or within the target fiber or yarn, including antistatic agents, brightening compounds, nucleating agents, antioxidants, UV stabilizers, bulking agents, permanent press finishes, softeners, lubricants and curing accelerators.

The fibers may be dyed or undyed. If the fiber is dyed, it may be solution dyed. The face weight of the yarn, pile height, and density will vary depending on the desired aesthetics and performance requirements of the end-use floorcovering article.

The primary backing layer can be any suitable primary backing. The preferred embodiment uses a nonwoven polyester spunbond. In one aspect, the polyester spunbond backing is Lutradur^{®} from Freudenberg Nonwovens of Weinheim, Germany. In another aspect, flat woven polyester tapes, such as Isis^{™} from Propex of Chattanooga, TN, may be utilized. In yet another embodiment, nonwoven material derived from recycled polyester, such as Colback^{®} from Colbond, Inc. of Enka, NC, may be utilized. If needed, a primary backing made of a woven tape with either staple fibers or nonwoven fabrics affixed can be used. Also, stitch bonded and knitted fabrics may be used as the primary backing layer.

The primary composite material that includes face yarns attached to the primary backing layer may be heat stabilized to prevent dimensional changes from occurring in the finished carpet tile. The heat stabilizing or heat setting process typically involves applying heat to the material that is above the glass transition temperature, but below the melting temperature of the components. The heat allows the polymer components to release internal tensions and allows improvement in the internal structural order of the polymer chains. The heat stabilizing process can be carried out under tension or in a relaxed state. The primary composite material is typically also stabilized to allow for the yarn and primary backing to shrink prior to the tile manufacturing process. Heat stabilization further aids in preventing the edges of the finished tile from curling. Dimensional stability may be measured using the Aachen Test (ISO 2551).

The primary composite material may be comprised of yarns tufted through a primary backing layer. Traditional tufting methods may be utilized to form the primary composite material of the carpet tile of the present invention, and/or the tufting methods taught in US 7,678,159 and US 7,846,214 may be utilized. The yarns may or may not be heat set prior to incorporation into the primary backing layer.

In one aspect, rather than a having a tufted yarn incorporated into the primary backing layer, a scatter coating of polymer (such as nylon polymer) may be applied to the surface of the primary backing layer. In another aspect, a knit fabric (such as a nylon knit) may comprise the surface of the carpet tile.

The primary composite material may be pre-stabilized and/or preshrunk, prior to the addition of a secondary backing layer. Pre-stabilization may be accomplished by any combination of moisture and/or heat (such as exposure to steam).

### Precoat Layer:

The precoat layer secures the tufts and prevents the tufts from pulling free of the primary backing and/or secondary backing layer of carpet tile. Typical standard industry tests developed and practiced for evaluating this feature of the carpet tile includes, for example, Tuft Bind of Pile Yarn in Floor Coverings ASTM D1335. The precoat layer may also provide pill and fuzz resistance properties to the carpet tile and may be evaluated according to the Velcro Roller Fuzzing Test ITTS 112.

The precoat layer is typically comprised of a polymer. In a preferred embodiment, the precoat is comprised of a thermoplastic polymer.

Application of a thermoplastic precoat layer to the primary composite material may be accomplished using a three-roll coater or any other coating method, and may be followed by exposure to heat (such as an oven). Temperature of the oven is typically greater than the softening point of the components comprising the thermoplastic material. A thermoplastic precoat is generally melted into the primary composite material in an oven to enable wicking of material into the face yarn.

The thermoplastic material includes olefin-containing thermoplastic polymers. In one aspect, an ethylene-vinyl acetate (EVA)-based material or a propylene-based elastomer may be utilized. PVC (polyvinyl chloride) containing a diluted form of PVC that contains additional amounts of plasticizers to further reduce viscosity may also be suitable. Combinations of any of the aforementioned thermoplastic materials may also be utilized.

Emulsifications of polymers may be used as a method of applying the precoat layer. These include, for example, SBR latex emulsions, vinyl acetate - ethylene (VAE) latex emulsions, nylon emulsions, polyolefin emulsions, and the like, and mixtures thereof. Emulsifications may also include viscosity modifiers, surfactants, froth aids, anti-microbials, and the like, and mixtures thereof. "Latex" can refer to the emulsified polymer, with or without additives, or the dried film derived from the emulsified polymer with or without additives. In another preferred embodiment, the precoat is comprised of styrene-butadiene rubber (SBR) or poly(vinyl acetate-ethylene) (VAE).

A foam generator combined with a knife-over gap coater may be utilized to apply the latex precoat layer to the primary composite material. The latex-containing precoat layer is then typically dried in an oven.

The precoat layer may include additives, such as, for example, bulking agents, antioxidants, tackifiers and wax, and mixtures thereof. The bulking agent may be organic or inorganic. The bulking agent may be present in amounts of 0-80 wt%. Inorganic bulking agent may include CaCO₃, BaSO₄, Fe₂CO₃/Fe₃O₄, glass fiber, glass cullet, gypsum, aluminum trihydrate (ATH), magnesium dihydrate (MDH), talc, silica, coal fly ash and carbon black, and mixtures thereof. Any of the inorganic bulking agents may be recycled materials, in whole or in part. The tackifier may be present in amounts of 0-60 wt%, preferably 10-60 wt%. The tackifier includes materials such as rosins, hydrocarbon resins, terpene resins, low molecular weight polyolefin and polyolefin copolymers, and mixtures thereof. The wax may be present in amounts of 0-50 wt%. Add-on weight of the thermoplastic precoat is typically 203.5-746.5 g/m² (6-22 oz/yd²), or even 271.4-678.6 g/m² (8-20 oz/yd²).

### Cap Layer:

The cap layer serves to provide durability to the article and to aid in handling and installing the carpet. The cap layer also serves to provide dimensional stability to the precoated primary composite and serves as the site of attachment of the optional reinforcing material to the precoated primary composite layer and/or the laminate layer. The cap layer is comprised of a thermoplastic olefin-containing polymer. The thermoplastic olefin containing polymer may be present in an amount of 10-100 wt%, preferably 15-80 wt%, more preferably 18-60 wt%, most preferably 20-40 wt%.

The thermoplastic olefin-containing polymer in the cap layer contains, as a polymer with "high temperature resistance", isotactic polypropylene (iPP). The thermoplastic olefin-containing polymer in the cap layer also contains a polymer with low temperature flexibility.. The ratio of the polymer with low temperature flexibility to the polymer with high temperature resistance is 1:1 to 10:1, preferably 2:1 to 7:1, most preferably 5:2 to 6:1.

Polymers with "low temperature flexibility" are polymers that do not exhibit cracking when exposed to temperatures and forces relevant to an industrial print or finishing process, handling, and/or carpet installation. In general, a polymer with low glass transition temperature relative to the test temperature of interest and a low degree of crystallinity may have low temperature flexibility. Low temperature flexibility can be quantified by several methods including but not limited to dynamic mechanical analysis or mandrel bending. Mandrel bending involves bending a film of polymer 180° around a 2 mm mandrel at temperature of (1.7±5.6)°C ((35±10)°F). The polymer having low temperature flexibility is a co-polymer of propylene and ethylene having a propylene content of 50-91%, or even 80-90%..

Polymers with "high temperature resistance" are polymers that exhibit minimal deformation when exposed to temperatures and forces that are relevant to an industrial printing or finishing process. In general, polymers with high glass transition temperature or high crystallinity and crystalline melting points have high temperature resistance. High temperature resistance is related to the intrinsic properties of the material and can be quantified by several methods including but not limited to the ring and ball softening temperature, vicat softening temperature, dynamic mechanical analysis, or heat distortion temperature of the material. For example, high temperature resistance can be defined as a ring and ball softening temperature > 125°C, preferably 137°C, more preferably 145°C, much more preferably 157°C, most preferably 165°C. Having one or more polymers with high temperature resistance in the cap and/or the optional laminate layer prevents distortion of the secondary backing when the carpet is exposed to an industrial printing process (such as a digital printing process). Thus, the appearance of the secondary backing is not affected, and the carpet can be handled at the high temperature conditions of the printing range without becoming too flexible. The polymer with high temperature resistance is isotactic polypropylene with an isotactic index of > 0.95. The isotactic index is a number represent the amount of isotactic polymer in polypropylene.

There are several methods to determine the isotactic index of a material, including but not limited to 13-C nuclear magnetic resonance spectroscopy, IR spectroscopy, xylene extraction, and boiling heptane extraction. To determine the isotacticity by heptane extraction, for example, an aliquot of the dried polymer is extracted with boiling heptane for 3 hours. The amount remaining in the extraction thimble is considered to be isotactic. The isotactic index is then defined according to: isotactic index = wt of insoluble polymer / total wt of polymer. The isotacticity of an individual polymer may ≥ 0.50, or ≥ 0.60, ≥ 0.70, or ≥ 0.80, or ≥ 0.90, or 0.92, or even ≥ 0.95. The isotacticity of a blend is the weighted average isotacticity of the components comprising the blend. In one aspect, the high temperature resistance polymer is polypropylene with a heat of fusion of ≥5 J/g. In another aspect, the high temperature resistance polymer is a cyclic olefin with glass transition temperature > 100°C.

The cap layer may further include a bulking agent. The bulking agent may be present in an amount of 0-90 wt%, preferably 40-80 wt%, more preferably 60-75 wt%. Thus, the cap layer may be comprised of a majority by weight of at least one bulking agent. The bulking agent is selected from e.g. CaCO₃, BaSO₄, Fe₂O₃/Fe₃O₄, glass fiber, glass cullet, gypsum, ATH, MDH, talc, silica, coal fly ash, wood particles and rubber particles, and mixtures thereof. Any of the aforementioned bulking agents may further be combined or replaced with recycled materials, such as, for example, recycled CaCO₃.

The preferred particle size distribution of the bulking agent may depend on the material of the bulking agent. In one embodiment, the particle size of the bulking agent may be such that < 1 wt% of particles are retained by a No. 35 mesh (500 µm) and ≤ 40 wt% pass through a No. 325 mesh (44 µm), or more preferably that < 1 wt% are retained by a No. 60 mesh (250 µm) and ≤ 30 wt% pass through a No. 325 mesh. In another embodiment, the average particle size is smaller than 500 µm, preferably < 100 µm, or more preferably < 60 µm. In another embodiment, the particle size of the bulking agent may be such that 90% of the particles are smaller than 500 µm, more preferably smaller than 100 µmicron, or even more preferably smaller than 325 mesh (44 µm). In another embodiment, more than 50% of the particles have a size of0.1-50 µm. In other embodiment, more than 50 wt% of the particles pass through a No. 325 mesh.

The cap layer may also include a compatibilizing agent. In one aspect, the compatibilizing agent is a polyolefin or polyolefin copolymer that has been modified with maleic anhydride functional groups. For example, the compatibilizing agent may be maleic anhydride modified polypropylene (MA-PP). Examples of other suitable compatibilizing agents include maleic anhydride modified olefin containing polymer, polyester copolymer, surfactants and steric acid, and mixtures thereof. The compatibilizing agent may be present in an amount of 0-10 wt%, preferably 0.2-5 wt%.

The type and the amount of bulking agent added to cap layer will typically affect the low temperature flexibility of the blended thermoplastic polymer. For example, it has been found that when larger amounts of bulking agent are added to the secondary backing material, a compatibilizing agent is needed in order to maintain proper low temperature flexibility.

In one aspect, when the blended thermoplastic polymer contains a bulking agent (i.e. the "bulked thermoplastic polymer blend"), the polymer may have an average density of ≥ 1.6 g/cm³.

Other additives may be included in the cap layer in order to improve certain performance features of the product. For example, and without limitation, additives such as adhesion promoters, processing aids, dyes, pigments and antioxidants, and mixtures thereof may be included.

### Reinforcement layer:

The reinforcement layer generally serves to improve the dimensional stability of the carpet tile and typically impacts its flexibility and/or drape during processing and handling. The reinforcement layer may be fiber-containing. The reinforcement layer may be comprised of materials that include fiberglass, mineral fiber, carbon fiber, polyester fiber, and mixtures thereof. These materials may be interlocked in a woven, knit or nonwoven construction. In one aspect, the reinforcement layer has a weight in the range from about 35-75 g/m² (gsm). A nonwoven mat of fiberglass may be suitable for use as the reinforcement layer of the carpet tile of the present invention.

In one aspect, the reinforcing layer is constructed such that the laminate layer and the cap layer are capable of adhering to one another despite the presence of the reinforcing layer between them. The laminate layer and the cap layer will penetrate the reinforcement layer from opposite sides. In this regard, the reinforcement layer may exhibit air permeability values 14.2-42.5 m³/min (500-1500 ft³/min) at 125 Pa.

### Laminate Layer:

The laminate layer may or may not be present in the carpet of the present invention. The laminate layer generally provides further structural and dimensional stability to the carpet. The laminate layer is comprised of a thermoplastic olefin-containing polymer. The thermoplastic olefin containing polymer may be present in an amount of 10-100 wt%, preferably 15-80 wt%, more preferably 18-60 wt%, most preferably 20-40 wt%.

The thermoplastic olefin-containing polymer in the laminate layer may contain a polymer with "high temperature resistance" such as, for example, isotactic polypropylene (iPP), thermoplastic vulcanizate (TPV) and thermoplastic polyolefin (TPO), and mixtures thereof. The thermoplastic olefin-containing polymer in the laminate layer may also contain a polymer with low temperature flexibility. In one embodiment, one polymer can serve as both the polymer with high temperature resistance and the polymer with low temperature flexibility. In another embodiment, two or more polymers can be blended together to achieve this same effect. In this case, the ratio of the polymer with low temperature flexibility to the polymer with high temperature resistance is 1:1 to 10:1, preferably 2:1 to 7:1, most preferably 5:2 to 6:1.

As discussed previously, polymers with "low temperature flexibility" are polymers that do not exhibit cracking when exposed to temperatures and forces relevant to an industrial print or finishing process, handling, and/or carpet installation. In general, a polymer with low glass transition temperature relative to the test temperature of interest and a low degree of crystallinity may have low temperature flexibility. Low temperature flexibility can be quantified by several methods including but not limited to dynamic mechanical analysis or mandrel bending. Mandrel bending involves bending a film of polymer 180° around a 2 mm mandrel at temperature of (1.7±5.6)°C ((35±10)°F). Polymers having low temperature flexibility include but are not limited to olefin-containing elastomers (such as polypropylene-containing elastomers), polyester copolymers, thermoplastic polyurethane, and mixtures thereof. In one aspect, the polymer with low temperature flexibility is a co-polymer of propylene and ethylene having a propylene content of 50-91%, or even 80-90%. In another aspect, the polymer comprising the thermoplastic elastomer is a single-site catalyzed propylene elastomer.

Polymers with "high temperature resistance" are polymers that exhibit minimal deformation when exposed to temperatures and forces that are relevant to an industrial printing or finishing process. In general, polymers with high glass transition temperature or high crystallinity and crystalline melting points have high temperature resistance. High temperature resistance is related to the intrinsic properties of the material and can be quantified by several methods including but not limited to the ring and ball softening temperature, vicat softening temperature, dynamic mechanical analysis, or heat distortion temperature of the material. For example, high temperature resistance can be defined as a ring and ball softening temperature < 125°C, preferably 137°C, more preferably 145°C, much more preferably 157°C, most preferably 165°C. Having one or more polymers with high temperature resistance in the laminate layer prevents distortion of the secondary backing when the carpet is exposed to an industrial printing process (such as a digital printing process). Thus, the appearance of the secondary backing is not affected, and the carpet can be handled at the high temperature conditions of the printing range without becoming too flexible. Polymers with high temperature resistance include, but are not limited to, isotactic polypropylene, polyester, and nylon 6. In one aspect, the high temperature resistance polymer is isotactic polypropylene with an isotactic index of > 0.95. The isotactic index is a number represent the amount of isotactic polymer in polypropylene.

As discussed previously, there are several methods to determine the isotactic index of a material. For the method and the definition of the isotacticity the same applies here as set out in the above section discussing the cap layer.

The laminate layer may further include a bulking agent. The bulking agent may be present in an amount of 0-90 wt%, preferably 40-80 wt%, more preferably 60-75 wt%. Thus, the laminate layer may be comprised of a majority by weight of at least one bulking agent. The bulking agent of the laminate layer as well as the particle size distribution thereof is the same as described above in connection with the bulking agent of the cap layer.

The laminate layer may also include a compatibilizing agent. In one aspect, the compatibilizing agent is a polyolefin or polyolefin copolymer that has been modified with maleic anhydride functional groups. For example, the compatibilizing agent may be maleic anhydride modified polypropylene (MA-PP). Other examples of suitable compatibilizing agents include maleic anhydride modified olefin containing polymer, polyester copolymer, surfactants and steric acid, and mixtures thereof. The compatibilizing agent may be present in an amount of 0-10 wt%, preferably 0.2-5 wt%.

The type and the amount of bulking agent added to laminate layer will typically affect the low temperature flexibility of the blended thermoplastic polymer. For example, it has been found that when larger amounts of bulking agent are added to the secondary backing material, a compatibilizing agent is needed in order to maintain proper low temperature flexibility.

In one aspect, when the blended thermoplastic polymer contains a bulking agent (i.e. the "bulked thermoplastic polymer blend"), the polymer may have an average density of ≥ 1.6 g/cm³.

Other additives may be included in the laminate layer in order to improve certain performance features of the product. For example, and without limitation, additives such as adhesion promoters, processing aids, dyes, pigments and antioxidants, and mixtures thereof may be included.

In one aspect, the laminate layer is comprised of a blended thermoplastic polymer wherein the blend contains the following components:
(a) 5-80 wt% of a first polymer having low temperature flexibility, and
(b) 1-20 wt% of a second polymer having high temperature resistance.

In one aspect, the composition of the laminate layer and the cap layer may be the same. Alternatively, in another aspect, the composition of the laminate layer and the cap layer may be different. The weight of the laminate layer and the cap layer may be the same. In another aspect, the weight of the cap layer and laminate layer may be different. The cap layer may be present by weight in an amount that is greater than the weight of the laminate layer. More specifically, the cap layer may be present in an amount that is two times the weight of the laminate layer.

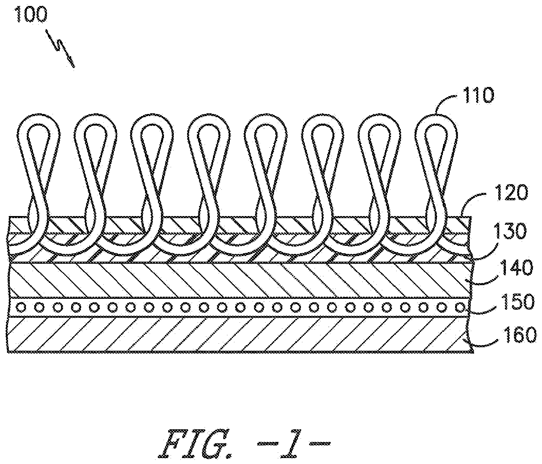

Figure 1 illustrates one embodiment of the carpet tile of the present invention. Carpet tile 100 is comprised of loop pile face yarns 110 which protrude from one surface of the carpet tile. In Figure 1, the face yarns are illustrated in a loop pile construction. Of course, it is to be understood that other face yarn constructions including cut pile constructions and combinations of loop pile and cut pile may likewise be used.

Face yarns 110 are tufted through a primary backing layer 120. Face yarns 110 and primary backing layer 120 make up a primary composite material. Precoat 130 is applied to a portion of face yarns 110, particularly the back loops of face yarns 110 which have been tufted through primary backing layer 120. Laminate layer 140 is provided in a layered spatial arrangement with precoat layer 130. A reinforcement layer 150 lies spatially in a layered arrangement between laminate layer 140 and cap layer 160. Each of layers 120, 130, 140 150 and 160 may be arranged substantially coextensive with one another.

### Cushion Layer:

The carpet tile of the present invention may further include a layer of cushion. The cushion layer is typically the layer located furthest from the face yarns and may be the surface of the carpet tile that directly contacts an area designation for carpet tile installation. However, the cushion layer may be located between any of the layers of the carpet as described herein.

The cushion layer may be construction of open and/or closed foam materials (such as polyurethane or thermoplastic polymer foam), nonwoven materials (such as felt), and combinations thereof. Exemplary formulations and constructions for a suitable layer of cushion are found in US 5,540,968 and US 7,182,989.

### Method of Manufacturing:

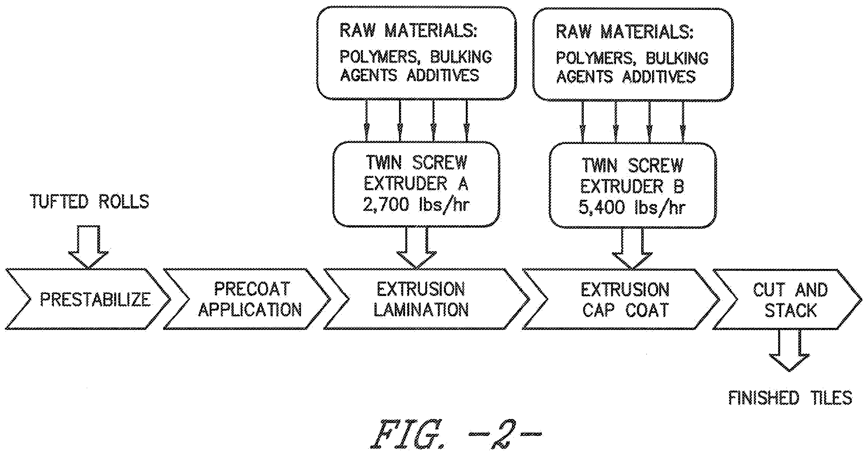

As noted herein, the thermoplastic polymer may be processed in either a single screw or a twin screw extruder from a pre-compounded material or from raw materials. Figure 2 provides a flow diagram of one embodiment of the present invention wherein twin screw extruders are utilized. Rolls of tufted primary composite material enter the coating process where they are pre-stabilized and precoated as described herein. Following these steps, the precoated carpet is extrusion laminated with raw materials entering through a twin screw extruder ("Extruder A") to form the laminate layer on the carpet substrate. Similarly, the next step extrusion coats the laminated carpet with raw materials entering the process through a twin screw extruder ("Extruder B"). The tufted carpet containing a laminate layer and a cap layer then proceeds to cutting and stacking where the carpet is cut into finished carpet tiles and stacked for storage and/or shipping.

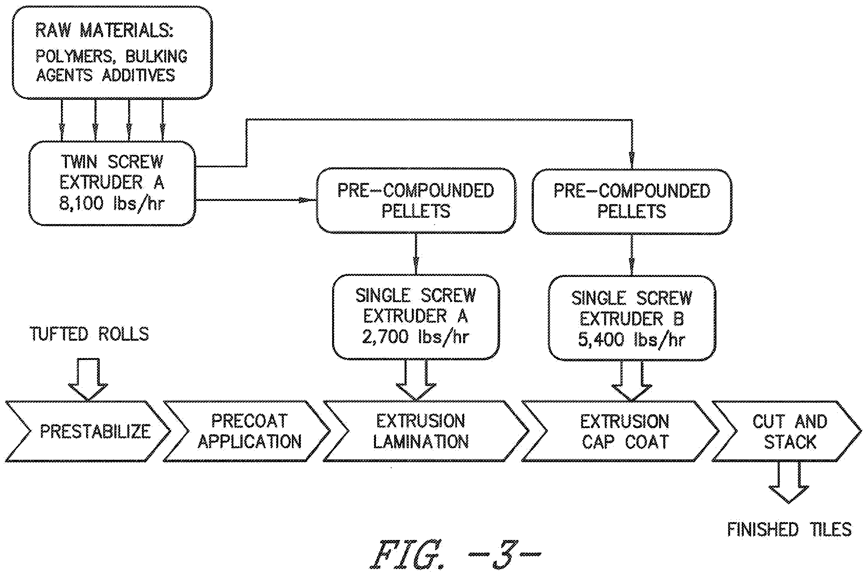

Figure 3 illustrates a similar process as that described in Figure 2, except that Figure 2 illustrates the additional step of converting raw materials into pre-compounded pellets via a twin screw extruder prior to further extrusion and application to the precoated carpet substrate. Figure 3 also illustrates that single screw extruders may then be utilized for application of the pre-compounded pellets in forming the laminate layer and the cap layer.

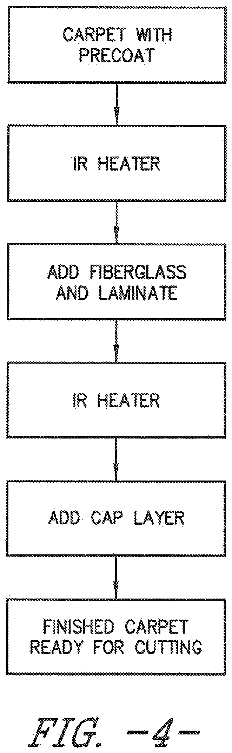

The substrate(s) may be heated prior to extrusion coating. Heating may be accomplished via infrared heat or convection oven or other method. Figure 4 illustrates that the carpet with precoat may progress through the manufacturing process to an infrared heater, for example, prior to the application of the laminate and reinforcement layers (e.g. fiberglass). Figure 4 further shows that a second heating step via infrared heating may be desirable prior to the addition of the cap layer. After application of the cap layer, the finished carpet is typically ready for cutting into carpet tiles.

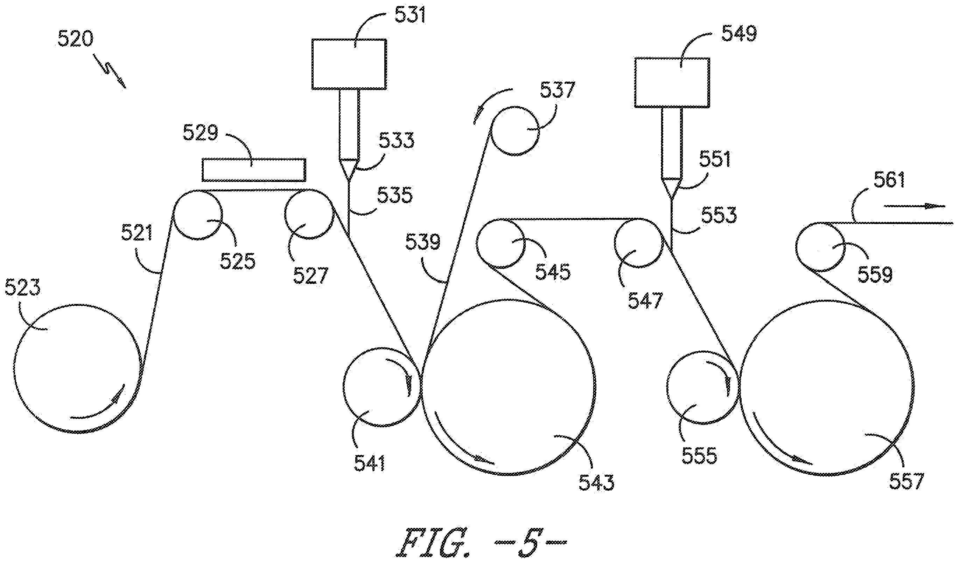

FIG. 5 schematically shows an exemplary manufacturing line 520 for making carpet tile according to the present invention. A length of greige good 521, i.e. yarn tufted into a primary backing, is unrolled from the roll 523. The greige good 521 passes over the rollers 525 and 527 with the primary backing toward the roller 523. Between rollers 525 and 527 is a heater 529 as described above.

An extruder 531 is mounted so as to extrude a sheet 535 of the polymeric backing through the die 533 onto the back of the greige good at a point between the roller 527 and the nip roll 541. The exact location at which the sheet 535 contacts the greige good can be varied depending on the line speed and the time desired for the molten polymer to rest on the greige good before passing between the nip roll 541 and the chill roll 543. In one aspect, the sheet 535 contact the greige good so as to lie on the greige good for 0.5-2 seconds, most preferably 1 second, before passing between the nip roll 541 and the chill roll 543.

In this depicted embodiment, a scrim of non-woven fiberglass 539 is fed from roll 537 so as to contact the chill roll 543 at a point just prior to the nip roll 541. As a result, the scrim 539 which will act as a reinforcing fabric in the finished carpet tile is laminated to the greige good through the polymer.

The pressure between the nip roll 541 and the chill roll 543 can be varied depending on the force desired to push the extruded sheet. In one aspect, there is 0.41 MPa (60 psi) of air pressure pushing the rolls together. Also, it may be desirable to include a vacuum slot in the nip roll. In addition, a jet of pressurized air may also be used to push the extruded sheet into the carpet backing.

The size of the chill roll 543 and the length of time the carpet rolls against it can be varied depending on the level of cooling desired in the process. In one aspect, the chill roll 543 is cooled by simply passing ambient water through it.

After passing over the chill roll 543, the carpet is brought over rollers 545 and 547 with the carpet pile toward the rollers. A second extruder 549 extrudes a sheet of polymer 553 through its die 551 on to the back of the scrim 539. Again, the point at which the extruded sheet 553 contacts the scrim 539 can be varied as described above.

At this point, if a secondary backing fabric is desired for the carpet tile, that fabric can be introduced from a roll similar to that shown at 537 so as to contact and be laminated to the carpet through the extruded sheet 553 as it passes between the nip roll 555 and the chill roll 557.

The carpet passes between the nip roll 555 and the chill roll 557. Again, the pressure applied between the two rolls 555 and 557 can be varied. In one aspect, 0.41 MPa (60 psi) of air pressure is applied against the nip roll 555.

After passing around the chill roll 557, the carpet passes around roll 559 and may pass over an embossing roll (not shown) to print a desired pattern on the back of the carpet.

While the apparatus shown in FIG. 5 illustrates one method for making a carpet tile with two layers of extruded backing and a reinforcing layer in between, the same construction can be made with a single extrusion die, nip roll and chill roll. In particular, the laminate layer of extruded backing and the reinforcing layer can be applied in a first pass through the line after which the carpet is rolled up. The cap layer of extruded backing can be applied on top of the reinforcing layer in a second pass through the same line, after which the carpet is ready to be cut into carpet tiles.

In one aspect, the processing temperature for extrusion coating the present carpet tile with a polyolefin thermoplastic material is 210-280°C. The extrusion die gap is sufficient to provide a draw ratio of1.0-2.5. In one aspect, the draw ratio is slightly greater than 1.

With respect to various processing parameters, the incoming substrate tensions (the reinforcement material and/or the precoated carpet layer) should be minimized so as to avoid causing residual mechanical stresses in the laminated structure. Lamination nip roll pressures should be sufficient to allow molten polymer to flow around fiber and/or yarn bundles. In one aspect, nip roll force per unit width is < 53.5 kg/cm (300 pounds/inch), and may be in the range from about 2.7-35.7 kg(cm (15-200 pounds/inch). After lamination, the thermoplastic polymer is typically cooled without delay via cooling drums capable of cooling the polymer to a temperature below its softening temperature.

In one aspect, the manufacturing process for extrusion coating the carpet tile of the present invention may be carried out as a two-pass process. In another aspect, the manufacturing process for extrusion coating the carpet tile of the present invention may be carried out in as a single-pass process. In a single-pass process, it would be desirable for the thermoplastic polymer to flow through the reinforcement layer so that the polymer ends up in contact with the precoat layer.

### Tiling:

The extrusion-coated carpet is then cut into carpet tiles. The present carpet tiles may be of any size or shape. For example, the carpet tiles may be cut into sizes of 10.2 cm by 10.2 cm (4 inches by 4 inches) to 183 cm by 183 cm (72 inches by 72 inches). The carpet tiles may be of the same length and width, thus forming a square shape. In one aspect, the carpet tiles are 45.7 cm (18 inches) square or 91.4 cm (36 inches) square. Alternatively, the carpet tiles may have different dimensions such that the width and the length are not the same. For example, the carpet tiles may be a rectangular shape, plank shape, octagonal shape, and the like, and mixtures thereof. The carpet may be cut into tiles using a computer controlled cutting device, such as a Gerber machine, or by using a mechanical dye cutter.

### Finishing and/or Printing Processes:

The present carpet tile may be dyed or printed by techniques known to those skilled in the art. Printing inks will contain at least one dye. Dyes may be selected from acid dyes, direct dyes, reactive dyes, cationic dyes, disperse dyes, and mixtures thereof. Acid dyes include azo, anthraquinone, triphenyl methane and xanthine types. Direct dyes include azo, stilbene, thiazole, dioxsazine and phthalocyanine types. Reactive dyes include azo, anthraquinone and phthalocyanine types. Cationic dyes include thiazole, methane, cyanine, quinolone, xanthene, azine, and triaryl methine. Disperse dyes include azo, anthraquinone, nitrodiphenylamine, naphthal imide, naphthoquinone imide and methane, triarylmethine and quinoline types.

As is known in the textile printing art, specific dye selection depends upon the type of fiber and/or fibers comprising the washable carpet tile that is being printed. For example, in general, a disperse dye may be used to print polyester fibers. Alternatively, for materials made from cationic dyeable polyester fiber, cationic dyes may be used.

Carpet tile printing may be achieved using a jet dyeing machine, or a digital printing machine, which places printing ink on the surface of the carpet tile in predetermined locations. One suitable and commercially available digital printing machine is the Millitron^{®} digital printing machine, available from Milliken & Company of Spartanburg, South Carolina. The Millitron^{®} machine uses an array of jets with continuous streams of dye liquor that can be deflected by a controlled air jet. The array of jets, or gun bars, is typically stationary. Another suitable and commercially available digital printing machine is the Chromojet^{®} carpet printing machine, available from Zimmer Machinery Corporation of Spartanburg, South Carolina. In one aspect, a tufted carpet made according to the processes disclosed in US 7,678,159 and US 7,846,214 may be printed with a jet dyeing apparatus as described and exemplified herein.

"Printing" is intended to include the process of applying ink to the carpet and the processes associated with fixation of the dye within the ink to the carpet including, but not limited to, steaming and drying of the carpet and handling of the carpet during these processes.

Viscosity modifiers may be included in the printing ink compositions. Suitable viscosity modifiers that may be utilized include known natural water-soluble polymers such as polysaccharides, such as starch substances derived from corn and wheat, gum arabic, locust bean gum, tragacanth gum, guar gum, guar flour, polygalactomannan gum, xanthan, alginates, and tamarind seed; protein substances such as gelatin and casein; tannin substances; and lignin substances. Examples of the water-soluble polymer further include synthetic polymers such as known polyvinyl alcohol compounds and polyethylene oxide compounds. Mixtures of the aforementioned viscosity modifiers may also be used. The polymer viscosity is measured at elevated temperatures when the polymer is in the molten state. For example, viscosity may be measured in units of centipoise at elevated temperatures, using a Brookfield Thermosel unit from Brookfield Engineering Laboratories of Middleboro, MA. Alternatively, polymer viscosity may be measured by using a parallel plate rheometer, such as made by Haake from Rheology Services of Victoria Australia.

The present carpet tile may be exposed to post treatment steps. For example, chemical treatments such as stain release, stain block, antimicrobial resistance and bleach resistance may be added to the carpet tile. Mechanical post treatments may include cutting, shearing, and/or napping the surface of the carpet tile.

In modular carpet tile installation, adhesives may be used to hold the tiles to the floor. These adhesive are typically polyolefin based or SBR latex based. Such adhesive material may be used to adhere the carpet tile to the floor, when standard carpet tiles are used as part of the carpet system of the present invention.

### EXAMPLES

The invention may be further understood by reference to the following examples which are not to be construed as limiting the scope of the present invention.

### Test Procedures

The performance requirements for commercial carpet include a mixture of well documented standard tests and industry known tests. Resistance to Delamination of the Secondary Backing of Pile Yarn Floor Covering (ASTM D3936), Tuft Bind of Pile Yarn Floor Coverings (ASTM D1335), and the Aachen dimensional stability test (ISO 2551) are performance tests referenced by several organizations (e.g. General Services Administration). Achieving Resistance to Delamination values > 0.91 kg (2 pounds) is desirable, and > 1.13 kg (2.5 pounds) even more desirable. Achieving Tuft Bind values > 3.62 kg (8 pounds) is desirable, and > 4.53 kg (10 pounds) even more desirable. With respect to the Aachen (ISO 2551) performance test, dimensional stability of less than ± 0.1% change may be most preferred.

Pilling and fuzzing resistance for loop pile (ITTS112) is a performance test known to the industry and those practiced in the art. The pilling and fuzzing resistance test is typically a predictor of how quickly the carpet will pill, fuzz and prematurely age over time. The test uses a small roller covered with the hook part of a hook and loop fastener. The hook material is Hook 88 from Velcro of Manchester, NH and the roller weight is 0.91 kg (2 pounds). The hook covered wheel is rolled back and forth on the tufted carpet face with no additional pressure. The carpet is graded against a scale of 1 to 5. A rating of 5 represents no change or new carpet appearance. A rating of < 3 typically represents unacceptable wear performance.

An additional performance/wear test includes the Hexapod drum tester (ASTM D-5252 or ISO/TR 10361 Hexapod Tumbler). This test is meant to simulate repeated foot traffic over time. It has been correlated that a 12,000 cycle count is equivalent to ten years of normal use. The test is rated on a gray scale of 1 to 5, with a rating after 12,000 cycles of 2.5=moderate, 3.0=heavy, and 3.5 = severe. Yet another performance/wear test includes the Radiant Panel Test. Some commercial tiles struggle to achieve a Class I rating, as measured by ASTM E 648-06 (average critical radiant flux >0.45 = class I highest rating).

### Lateral Movement Test:

The amount of movement in a mat or carpet tile is measured using the lateral movement test. First a location on the floor is marked usually using a piece of tape. Next a mat or carpet tile is placed at that mark. For a lateral movement walk test, the person conducting the test walks over the test piece 150 times. Each pass must be in the same direction to ensure accurate measurement movement. Once this is done 150 times in the same direction, the person conducting the test must measure how far the test piece is from the original location. This should be done on both of the front corners. Once a walk test is completed, a second Lateral Movement Cart Test is run. This test involves the same process, but requires a cart holding a 45.3 kg (100 lb.) load to roll over the test piece 50 times. The distance is then measured and recorded.

### Tuft Lock Test:

The tuft lock test was conducted by cutting out a sample of finished carpet tile approximately 15.2 cm X 25.4 cm (6" X 10"). Once the sample was cut out, it was placed in a TensiTech tensile testing machine. A tensile testing program was then run allowing the machine to grasp on to a single tuft in the carpet. Once the machine locked on to a single tuft, it recorded how much force was required to pull the tuft out of the backed carpet tile. This data was then recorded and run 4 more times for a total of 5 pulls. Once all tests were complete the data was evaluated making sure all pulls recorded a value > 4.0.

Low temperature flexibility may be measured by low temperature mandrel bend test. In mandrel bend test, the sample is wrapped around a cylinder ("mandrel") of specified diameter and rated. The next smallest cylinder is used until the film completely breaks. The smallest passing diameter cylinder is reported along with a score. More details about the mandrel bend test can be found in ASTM D522. The sample and Mandrel bend testing device was cooled to (1.7±5.6)°C ((35±10)°F) until the temperature reached equilibrium before testing. In this aspect, low temperature flexibility can be defined as no crack and no significant whitening or crazing after bending around a 2 mm mandrel at temperature of (1.7±5.6)°C ((35±10)°F). Other possible method to characterize the low temperature flexibility includes but not limited to dynamic mechanical analysis (DMA).

A carpet and/or carpet tile exhibiting high temperature resistance may be described as exhibiting minimal deformation when exposed to temperatures and forces that are relevant to an industrial printing or finishing process. In other words, a carpet and/or carpet tile exhibiting high temperature resistance is one wherein the backing material does not soften enough to have a visible deformation after exposure to a digital printing process. The high temperature resistance can be characterized by ring and ball softening temperature > 160°C. In a ring and ball softening temperature, two horizontal disk of material, cast in shouldered brass rings, are heated at a controlled rate in a liquid bath, preferably to be glycerin, while each supports a steel ball. The softening point is reported as the mean of the temperature at which the two disks soften enough to allow each ball, enveloped in the testing material, to fall a distance of 25 mm. More details about this testing is described in ASTM D36-95.

Low temperature flexibility and high temperature resistance may be defined as a modulus at a specific temperature. Low temperature flexibility would be a modulus below a certain value at a low temperature and high temperature resistance would be a modulus above a certain value at a high temperature. There are three ASTM methods relating to these features:
D5279: Standard Test Method of Plastics: Dynamic Mechanical Properties: In Torsion
D1043: Standard Test Method for Stiffness Properties of Plastics as a function of Temperature by Means of a Torsion Test
D1053: Standard Test Methods for Rubber Property-Stiffening at Low Temperatures: Flexible Polymers and Coated Fabrics.

All three of these methods give modulus data as a function of temperature by stressing a polymer test piece in torsion. D5279 currently appears to be the most modern and preferred method.

Other methods to characterize the high temperature resistance includes but not limited to DMA, and Vicat softening temperature test ASTM D1525.

Table 1 contains a listing of some of the tests discussed herein, as well as others that are useful for characterizing carpet tile:

**Table 1: Test Parameters**

| **Physical Property** | **Units/Description** | **Test Method** |
|---|---|---|
| Delamination Strength | Peel Average - lbf/in. | ASTM 3936 |
| Velcro | (visual evaluation) | 1 (poor) - 5 (no effect) |
| Tuft Bind (Dry) | Peak Load Ibf | ASTM 1335 |
| Tuft Bind (Wet) | Peak Load Ibf | ASTM 1335 |
| Flatness | Single corner measurement, sum of 4 corners | |
| Dimensional Stability (Aachen) | Percent change | Aachen ITTS 004 ISO 2551 |
| Environmental Cycling | Flatness, dimensional stability | 4 tiles cycled |
| | | 149 F/10%rh,149 F/90%RH, 50 F/90%RH, 50 F/10%RH for two weeks (6 hour cycle) |
| | | Test Method |
| Flexibility at Cold Temperature | | Mandrell Bend |
| Appearance of Cut | | |
| Caster Chair | Delamination | Inspection after 50k cycles |
| TARR (Hexapod Wear) | Appearance Change (1-5). | ASTM D5252 |
| | TARR (Texture Appearance Retention Rating) | |
| | | 4k, 12k cycles |
| Radiant Panel | Critical radiant energy flux | ASTM E-648 |
| | | NFPA 253 |
| Smoke (FL, NY, NF, NF NY) | Optical density | ASTM E662 |
| | | NFPA 258 |
| Walk Testing | Wear Testing | Accelerated Foot Traffic Test |

Several commercially available and inventive carpet samples were prepared and tested for mandrel bend according to test methods described herein. The test results are provided in Table 2.

**Table 2: Test Results for Mandrel Bend Test**

| **SAMPLE** | **Sample Temperature (°F)** | **Mandrel Size (mm)** | **Roller Temperature (°F)** | **Bend Results** | **Crease White/ Crack rating** |
|---|---|---|---|---|---|
| Ecoworx^{®} - a | 37 | 2 | 41 | D | 4 |
| Ecoworx^{®} - b | 38 | 2 | 37 | D | 4 |
| Ecoworx^{®} - c | 34 | 2 | 29 | D | 4 |
| Ecoworx^{®} - d | 36 | 2 | 28 | D | 4 |
| Ecoworx^{®} - e | 35 | 2 | 29 | D | 4 |
| Ecoworx^{®} - f | 37 | 2 | 28 | D | 4 |
| Ecoworx^{®} - g | 37 | 2 | 29 | E | 5 |
| Ecoworx^{®} - h | 36 | 2 | 29 | E | 5 |
| Example 1 | 37 | 2 | 35 | A | 1 |
| Example 2 | 35 | 2 | 35 | A | 1 |
| Example 3 | 29 | 2 | 35 | A | 1 |
| Example 4 | 27 | 2 | 35 | A | 1 |
| Example 5 | 35 | 2 | 37 | A | 1 |
| | | | | | |

| No affect | Whitening - no break - light | Whitening - no break - moderate | Whitening - no break - cracks | Break: partial width | Break: full width |
|---|---|---|---|---|---|
| A | B | C | D | E | F |
| 1 | 2 | 3 | 4 | 5 | 6 |

## Claims

1. A carpet comprising the following sequential layers:
(a) pile yarns tufted through a primary backing to form a primary composite layer;
(b) a precoat layer comprising a polymer; and
(c) a backing layer comprising (i) a thermoplastic olefin polymer which is a polymer blend comprising
- 5-80 wt.-% of a propylene/ethylene copolymer having a propylene content of 50-91%, and having low temperature flexibility, and
- 1-20 wt.-% of an isotactic polypropylene having an isotactic index of > 0.95 and having high temperature resistance.

2. The carpet of claim 1, wherein the backing layer further comprises (ii) a bulking agent, and wherein (i) and (ii) form a bulked thermoplastic olefin polymer.

3. The carpet of claim 1 or 2, which further includes a reinforcement layer following the primary composite layer.

4. The carpet of claim 1 or claim 3 referring back thereto, which further includes a laminate layer comprising an olefin-containing thermoplastic polymer.

5. The carpet of claim 4, wherein thermoplastic polymer of the laminate layer further includes a bulking agent.

6. The carpet of claim 4 or 5, wherein the olefin-containing thermoplastic polymer of the laminate layer is a polymer blend comprising:
(a) 5-80 wt.-% of a first polymer selected from propylene/ethylene copolymer having a propylene content of 50-91 % and having low temperature flexibility, and
(b) 1-20 wt.-% of a second polymer which is an isotactic polypropylene having an isotactic index of > 0.95 and has high temperature resistance.

7. The carpet of claim 1 or 2, which is a carpet tile.

8. The carpet of claim 2, wherein the backing layer further includes 0.1-10 wt.-% of a compatibilizing agent, preferably selected from maleic anhydride modified olefin-containing polymer, polyester copolymer, surfactants, steric acid, and mixtures thereof.

## Patentansprüche

1. Teppich, umfassend die folgenden aufeinanderfolgenden Schichten:
(a) Hohlgarne, die durch ein primäres Trägermaterial getuftet sind, um eine primäre Kompositschicht zu bilden;
(b) eine Precoat-Schicht, umfassend ein Polymer; und
(c) eine Trägerschicht, umfassend (i) ein thermoplastisches Olefinpolymer, welches eine Polymermischung ist, umfassend
- 5-80 Gew.-% eines Propylen/Ethylen-Copolymers mit einem Propylengehalt von 50-91 % und mit Niedrigtemperaturflexibilität und
- 1-20 Gew.% eines isotaktischen Polypropylens mit einem isotaktischen Index von > 0,95 und mit Hochtemperaturbeständigkeit.

2. Teppich gemäß Anspruch 1, worin die Trägerschicht ferner (ii) ein Füllmittel umfasst und worin (i) und (ii) ein voluminöses thermoplastisches Olefinpolymer bilden.

3. Teppich gemäß Anspruch 1 oder 2, der ferner eine Verstärkungsschicht folgend auf die primäre Kompositschicht umfasst.

4. Teppich gemäß Anspruch 1 oder 3, der sich hierauf bezieht, der ferner eine Laminatschicht umfasst, die ein olefinhaltiges thermoplastisches Polymer umfasst.

5. Teppich gemäß Anspruch 4, worin das thermoplastische Polymer der Laminatschicht ferner einen Füllstoff umfasst.

6. Teppich gemäß Anspruch 4 oder 5, worin das olefinhaltige thermoplastische Polymer der Laminatschicht eine Polymermischung ist, umfassend:
(a) 5-80 Gew.-% eines ersten Polymers, ausgewählt aus einem Propylen/Ethylen-Copolymer mit einem Propylengehalt von 50-91 % und mit Niedrigtemperaturflexibilität, und
(b) 1-20 Gew.% eines zweiten Polymers, welches ein isotaktisches Polypropylen mit einem isotaktischen Index von > 0,95 ist und mit Hochtemperaturbeständigkeit ist.

7. Teppich gemäß Anspruch 1 oder 2, der eine Teppichfliese ist.

8. Teppich gemäß Anspruch 2, worin die Trägerschicht ferner 0,1-10 Gew.-% eines Kompatibilisierungsmittels umfasst, das bevorzugt ausgewählt ist aus Maleinsäureanhydridmodifiziertem olefinhaltigem Polymer, PolyesterCopolymer, Tensiden, Stearinsäure und Mischungen hiervon.

## Revendications

1. Tapis comprenant les couches séquentielles suivantes :
(a) des fils de velours tuftés à travers un dossier primaire pour former une couche composite primaire ;
(b) une couche de pré-enduction comprenant un polymère ; et
(c) une couche de dossier comprenant (i) un polymère d'oléfine thermoplastique qui est un mélange polymère comprenant
- 5-80% en poids d'un copolymère de propylène/éthylène présentant une teneur en propylène de 50-91 %, et présentant une flexibilité à basse température, et
- 1-20% en poids d'un polypropylène isotactique présentant un indice isotactique de > 0,95 et présentant une résistance à haute température.

2. Tapis selon la revendication 1, dans lequel la couche de dossier comprend en outre (ii) un agent de voluminisation, et dans lequel (i) et (ii) forment un polymère d'oléfine thermoplastique volumineux.

3. Tapis selon la revendication 1 ou 2, qui inclut en outre une couche de renfort à la suite de la couche composite primaire.

4. Tapis selon la revendication 1 ou la revendication 3 faisant référence à celle-ci, qui inclut en outre une couche laminée comprenant un polymère thermoplastique contenant une oléfine.

5. Tapis selon la revendication 4, dans lequel le polymère thermoplastique de la couche laminée inclut en outre un agent de voluminisation.

6. Tapis selon la revendication 4 ou 5, dans lequel le polymère thermoplastique contenant une oléfine de la couche laminée est un mélange polymère comprenant :
(a) 5-80 % en poids d'un premier polymère sélectionné parmi un copolymère de propylène/éthylène présentant une teneur en propylène de 50-91 % et présentant une flexibilité à basse température, et
(b) 1-20 % en poids d'un second polymère qui est un polypropylène isotactique présentant un indice isotactique de > 0,95 et présentant une résistance à haute température.

7. Tapis selon la revendication 1 ou 2, qui est une dalle de tapis.

8. Tapis selon la revendication 2, dans lequel la couche de dossier inclut en outre 0,1-10% en poids d'un agent de compatibilité, de préférence sélectionné parmi un polymère contenant une oléfine modifié par anhydride maléique, un copolymère de polyester, des tensioactifs, de l'acide stérique et des mélanges de ceux-ci.
